# EUROPEAN PATENT APPLICATION

(11) **EP 1 262 881 A1**
(43) Date of publication of application: **04.12.2002**
(21) Application number: 01830356.0
(22) Date of filing: 31.05.2001
(51) Int. Cl.: G06F 17/30, H04N 7/24, G06F 17/28

(54) **Method for the management of data originating from procedural statements**

(71) Applicant: Project Automation S.p.A., 20052 Monza (MI) (IT)
(72) Inventor: Mazzilli, Roberto, 00153 Roma (IT)
(74) Representative: Checcacci, Giorgio

(57) **Abstract**

A method for the digital management of data originating from procedural statements made by participants at a trial comprising the steps of
a)providing first digital data (10) in text format relative to said procedural statements, said first digital data (10) being subdivided into a plurality of predetermined portions (11) ;
b)providing second digital data (20) relative to said procedural statements in at least one format selected from the group comprising video format, audio format and audio-video format; and
c) associating linking codes (32), which allow said predetermined portions (11) of said first digital data (10) to be linked to corresponding portions (21) of the second digital data (20), to said first digital data (10).

## Description

The present invention regards a method for the digital management of data originating from procedural statements made by participants in a trial.

The present invention regards, moreover, an apparatus and a computer program for the aforementioned digital management of data originating from procedural statements.

Moreover, the present invention regards a unit and a computer program to manage the acquisition of the aforementioned data regarding procedural statements and a system for the acquisition of said data including such a unit.

Finally, the present invention also regards a method, an apparatus and a computer program for the digital retrieval of digital data originating from procedural statements made by the participants at a trial.

It is noted that in the present description registered trade marks may be quoted.

The procedural statements are all statements made by participants in a trial (for example the accused, witnesses, judge, barristers, public prosecutor) during the course of one or more hearings of a trial.

A trial includes all the stages of a penal or civil procedure necessary for a jury to pronounce a sentence and is subdivided into a plurality of hearings which take place in a courtroom.

Typically, for each trial there is a dossier comprising a plurality of audio tapes containing all the statements made during each hearing, a transcription of the audio tapes, all pieces of evidence or exhibits (for example telephone records, recorded conversations or communications, certificates, photos) and, possibly, audio-video tapes (such as VHS) containing the audio-video recordings of each hearing.

The audio tape transcriptions are typically done manually on paper or digitally (for example, through a Microsoft Word computer).

The dossier is managed by the office of the clerk of the court and is updated at each hearing.

Once the sentence is pronounced at the end of a trial the dossier is filed and is open to the public at the office of the clerk of the court.

However, before the pronouncement of a sentence, the dossier is not available for public consultation but only for the concerned parties.

Consultation of the various parts of a dossier is currently very laborious and time-consuming since separate consultation of the audio recordings, of their written or digital transcription, of the exhibits and of the audio-video recordings are necessary. Moreover, in particular as far as magnetic audio tapes and magnetic audio-video VHS tapes are concerned, consultation takes a long time since such tapes only allow sequential consultation making the search for a given part of a recording inefficient since it is onerous in terms of access time.

The technical problem at the basis of the present invention is the simplification of the filing, the search, the retrieval and the consultation of a trial dossier.

The Applicant found that such a problem can be solved through suitable digital management of the data originating from procedural statements made during a trial by its participants.

Thus, it is a first aspect of the present invention to provide a method for the digital management of data originating from procedural statements made by the participants at a trial comprising the steps of
a)providing first digital data in text format relative to said procedural statements, said first digital data being subdivided into a plurality of predetermined portions.
b)providing second digital data relative to said procedural statements in at least one format selected from the group comprising video format, audio format and audio-video format;
characterised in that it also comprises the step of
c)associating linking codes to said first digital data that allow to link said predetermined portions of said first digital data to corresponding portions of the second digital data.

The method according to the invention, advantageously, allows the search, retrieval and consultation of a trial dossier to be simplified. Indeed, it allows a desired portion in text format to be retrieved through a simple search (for example through key words or predetermined search fields) in the first digital data and the retrieval of the corresponding portion of second digital data in audio, video and/or audio-video format using simply the linking codes associated with the first digital data. This allows the aforementioned laborious and time consuming searches of the state of the art to be avoided.

Further advantageous characteristics of the method according to the invention are indicated in the dependent claims.

A second aspect of the present invention is an electronic apparatus for the digital management of data originating from procedural statements made by participants at a trial comprising means adapted for carrying out the steps of the method according to the first aspect of the invention.

A third aspect of the present invention is a computer program including instructions suitable for carrying out the steps of the method according to the first aspect of the invention when the program is run on a computer.

Advantageously, the computer program is embodied on a computer readable medium.

For example, the computer readable medium is a read-only memory or a magnetic recording means. Typical examples of read-only memories are CD ROM or a semiconductor ROM. In turn, typical examples of magnetic recording means are floppy disk or hard disk.

According to one embodiment, the computer program is carried on a carrier signal.

Typically, the carrier signal is an electrical or optical signal. For example, it can be an electrical signal generated by a modem or a radio wave signal. Such a carrier signal can, for example, be carried by an electric or optical cable, by radio waves or by other conventional means of transmission.

A fourth aspect of the present invention is a unit for the management of the acquisition of data relative to procedural statements made by participants of a trial, said statements being recorded in at least one format selected from the group audio, video and audio-video through recording means each associated with a participant or type of participant, said unit comprising
- first control means which, following the start of a participant's statement, are suitable for automatically activating the recording means associated with that participant;
- second control means which, following the start of a participant's statement, are suitable for generating an identification code containing information relative to the participant associated with the recording means activated by the first control means;
- third control means which, following the start of a participant's statement, are suitable for generating a linking code containing information relative to the instant when the recording means is activated by the first control means;
- fourth control means which, following the start of a statement by a participant, generate a correspondence between the identification code generated by the second control means and the linking code generated by the third control means.

A fifth aspect of the present invention is a computer program including instructions which, when executed in a computer, constitute the control means of the unit according to the fourth aspect of the invention.

As for the characteristics of said computer program reference is made to what already disclosed above.

A sixth aspect of the present invention is a system for the acquisition of data relative to procedural statements made by participants at a trial comprising
- recording means each associated with a participant or type of participant suitable for recording the statements made by the participants in at least one format selected from the group audio, video and audio-video; and
- a management unit according to the fourth aspect of the invention.

Further advantageous characteristics of the program and of the system of the fifth and sixth aspects of the invention, respectively, are indicated in the dependent claims.

A seventh aspect of the invention is a method for the digital retrieval of digital data originating from procedural statements made by participants at a trial including the steps of
A)displaying a query mask comprising a plurality of predetermined fields for searching for predetermined information in first digital data in text format;
B)displaying, following a search in at least one field of said query mask, a predetermined portion of the first digital data which contain the predetermined searched information;
C)displaying, together with the portion of the first digital data displayed in step B), a linking element which allows to output a portion of the second digital data corresponding with the portion of the first digital data, said second digital data being in at least one format selected from the group comprising video format, audio format and audio-video format.

Further advantageous characteristics of the method according to the seventh aspect of the invention are indicated in the dependent claims.

An eighth aspect of the invention is an apparatus for the digital retrieval of digital data originating from procedural statements made by participants at a trial comprising means suitable for carrying out the steps of the method according to the seventh aspect of the invention.

A ninth aspect of the invention is a computer program for the digital retrieval of digital data originating from procedural statements made by participants at a trial comprising instructions suitable for carrying out the steps of the method according to the seventh aspect of the invention, when the program is run in a computer.

As for the characteristics of said computer program reference is made to the above description and to the dependent claims.

Characteristics and advantages of the invention will now be illustrated with reference to embodiments shown as nonlimiting examples, in the attached drawings in which:
- figure 1 shows a schematic representation of first and second digital data used in the method according to the invention;
- figure 2 shows a schematic representation of an embodiment of first digital data used in the method according to the invention;
- figures 3a and 3b show a schematic representation of an embodiment of second and third digital data used in the method according to the invention and first digital data processed by the method according to the invention;
- figure 4 shows a schematic representation of an embodiment of an apparatus according to an aspect of the invention;
- figure 5 shows a schematic representation of an embodiment of a system for the acquisition of data relative to procedural statements according to an aspect of the invention;
- figure 6 shows a schematic representation of an embodiment of second and fourth digital data used in the method according to the invention and first digital data processed by the method according to the invention;
- figure 7 shows a schematic representation of an embodiment of recording means of the system of figure 5;
- figure 8 shows a schematic representation of an embodiment of a query mask used in a method of retrieval according to the invention;
- figure 9 shows a schematic representation of an embodiment of a portion of first digital data in text format comprising links to corresponding portions of second and fourth digital data;
- figures 10a and 10b show a schematic representation of an alternative embodiment to that of figures 3a and 3b of second and third digital data used in the method according to the invention and first digital data processed by the method according to the invention.

The method according to the invention allows data originating from procedural statements made by the various participants at a trial during a hearing to be managed.

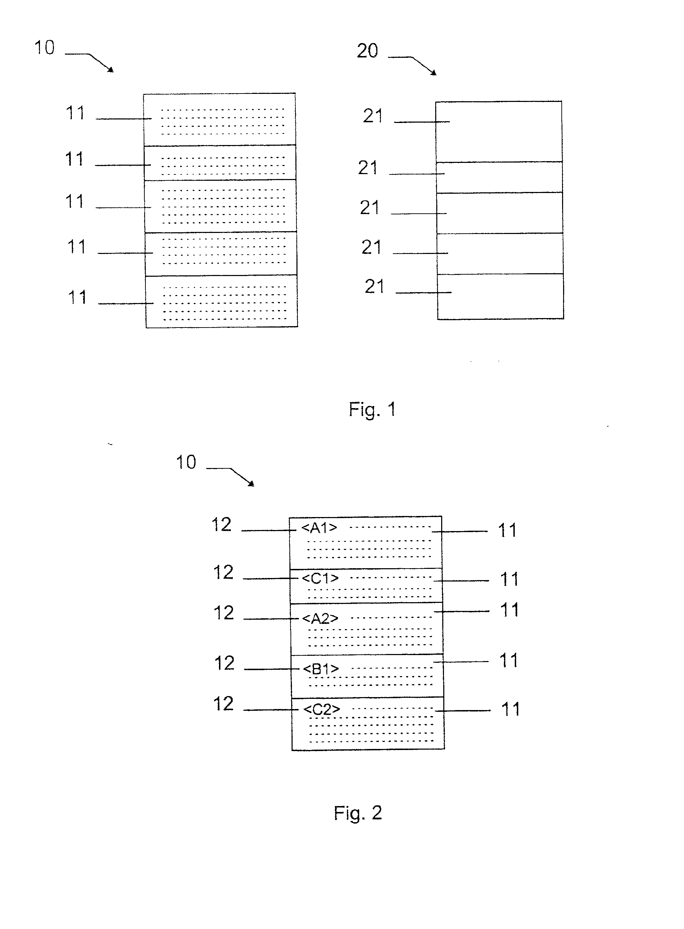

According to one embodiment, the management method comprises the steps of
a)providing first digital data 10 in text format relative to the procedural statements made during the hearing, said first digital data being subdivided into a plurality of predetermined portions 11;
b)providing second digital data 20, relative to said procedural statements, in video, audio and audio-video format;
c)associating linking codes 32 with first digital data 10 which allow the predetermined portions 11 of the first digital data 10 and corresponding portions 21 of second digital data 20 to be related (figures 1-3).

The first digital data 10 in text format are, for example, files in conventional formats such as HTML, TXT, RTF, PDF or DOC obtained, for example, through a suitable transcription, by an operator, of magnetic audio tapes recorded during the hearing.

In turn, the second digital data 20 in audio, video and audio-video format are, for example, files in conventional format - such as MPEG, MJPEG, Real Network, Microsoft Media Player, Quick Time, MP3 (audio) - and are obtained through an analogue-digital conversion of the magnetic audio, video and audio-video tapes recorded during the hearing through suitable microphones and cameras.

Such a conversion can be made through conventional software means such as, for example, Real Producer, Microsoft Media Player, Quick Time.

According to a preferred alternative embodiment, the second audio-video digital data are digital files obtained by a digital videocamera in one of the conventional formats or converted into one of such formats.

Moreover, it is possible to obtain the second data directly in the form of audio, video or audio-video digital files through suitable devices such as commercial digital recorders equipped with a mass memory filing system.

In the illustrated embodiment, the predetermined portions 11, in which the first digital data 10 are subdivided, correspond with statements successively made by the participants at a trial during a hearing.

An identification code 12 is associated with each predetermined portion 11 (figure 2).

Such identification codes 12 are, for example, associated with the respective portions 11 during the transcription step of the first digital data 10 by the operator who makes the transcription.

An identification code 12 is, for example, made up of a tag placed at the start of each predetermined portion and comprises information (in figure 2 represented by codes A1, C1, A2, B1 and C2) relative to the participant (A, B, C...) who made the statement contained within the predetermined portion and to the progressive number (1, 2,...) of the statement made by that participant.

In the embodiment described, the step c) of the management method comprises the step of
c1)providing third digital data 30 containing identification codes 31 of the predetermined portions 11 of said first digital data 10, the linking codes 32 which allow said predetermined portions 11 of said first digital data 10 to be linked to corresponding portions 21 of second digital data 20 and a correspondence between said identification codes 31 and linking codes 32.

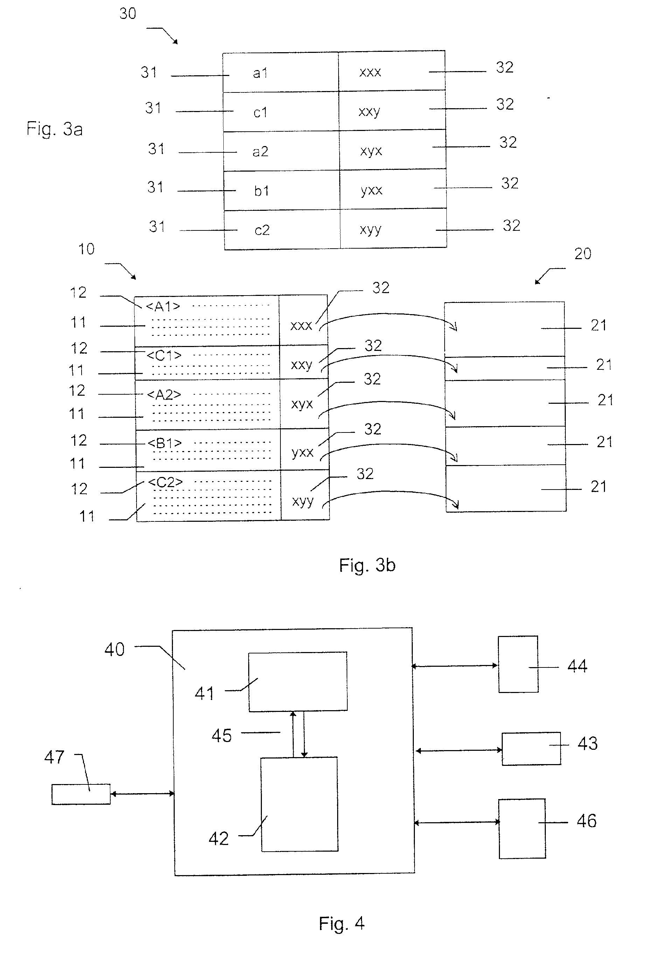

In the embodiment shown in figure 3a, the third digital data 30 provided in step c1) comprise a table containing in the left column the identification codes 31 and in the right column the linking codes 32. The identification codes 31 and linking codes 32 situated in the same line are corresponding codes which allow corresponding portions of the first and second digital data 10, 20 to be linked.

In one embodiment of the invention, the step c1) is carried out during the acquisition of second digital data 20.

For example, in the case where the second digital data 20 are in audio-video format, these are acquired in a courtroom through suitable microphones, television cameras and a video recorder.

A microphone and a television camera are associated with each participant or type of participant at the trial.

An identification code is associated with each microphone and each television camera. In the example illustrated the code a is associated with the microphone and the television camera associated with the participant or type of participant A, code b is associated with the microphone and the television camera associated with the participant or type of participant B, and so on.

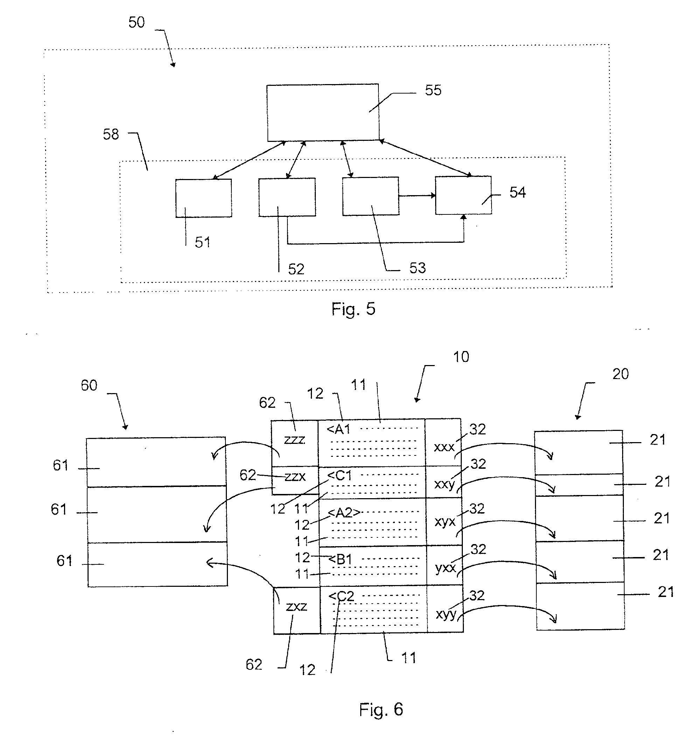

Each time that a participant begins his statement, the microphone and the television camera associated with that person activates automatically through suitable control means (described further on with reference to figure 5) and in the third digital data 30 - according to a step i. of step c1) of the management method - an identification code 31 is generated containing information relative to the participant associated with the microphone and television camera which have activated and to the number of times that such microphone and such television camera have been activated.

For example, in the case where, for the first time, the microphone and the television camera associated with the participant A activate, in step i. of the management method the identification code a1 is generated which will identify the predetermined portion 11 of the first digital data 10 in which the first statement made by the participant A will be contained and with which the identification code 12 A1 will be associated.

Once the identification code 31 (for example a1) is generated in step i., the step c1) includes also the step ii. of generating the linking code 32 (in the example, code xxx) which will allow the linking of the predetermined portion 11, containing the statement made upon the activation of the microphone and television camera, with the corresponding portion 21 of the second digital data 20 acquired through the microphone, the television camera and the video recorder.

The linking code 32 generated in step ii. can, for example be a time stamp containing information relative to the instant (hours, minutes, seconds) when the microphone and television camera activated and to the time window associated with every activation (for example, available in the form from <time> to <time> or in the form from <time> for <duration>). Such code 32 allows the linking of the corresponding portion 21 of the second digital data 20 in audio-video format in that such data contain information relative to the instants (hours, minutes, seconds) when they are acquired and to the duration of activation of the audio-video recording and allow the retrieval of the information contained therein according to the instants of acquisition.

Moreover, in a step iii. of step c1) of the management method, the linking code 32 generated (in the example xxx) is inserted into the table of the third digital data (30) in correspondence with the identification code 31 (in the example a1) generated in step i..

In the case where the second digital data 20 are in audio format only and/or in video format only, they are acquired through suitable microphones and/or television cameras each associated with a participant or a type of participant and the steps i-iii of the step c1) of the management method are carried out in a completely similar way to that described above for the case of second digital data 20 in audio-video format.

At the time of retrieval of a predetermined portion 11 of first digital data 10, the corresponding portion 21 of the second digital data 20 can be retrieved using the third digital data 30. For example, in the case where the portion 11 having the identification code A1 is retrieved, the corresponding portion 21 can be retrieved consulting the table of figure 3a and using the linking code 32 xxx associated with the identification code 31 al.

The method according to the invention allows, therefore, the retrieval of a desired portion 21 of the second digital data 20 in audio, video and/or audio-video format through a simple search (for example through key words or predetermined search fields, as will be described further on), on the first digital data 10, of the corresponding portion 11 in text format.

In an embodiment of the management method, the step c) also includes the step of
c2)inserting, in each portion 11 of the first digital data 10, the linking code 32 which allows such portion 11 to be linked to the corresponding portion 21 of the second digital data 20, using the identification codes 12 contained in said first digital data 10 and the third digital data 30 (figure 3b).

More particularly, in the step c2), for each portion 11 of the first digital data 10, the identification code 12 (for example A1) associated with it and the corresponding identification code 31 (in the example a1) in the third digital data 30 are identified. Once the identification code 31 is identified the linking code 32 (in the example xxx) which, in the table of figure 3a, is situated on the same line as the considered identification code 31 (in the example the code a1) is inserted into the portion 11 corresponding thereto.

In this case, at the time of the retrieval of a predetermined portion 11 of the first digital data 10, the corresponding portion 21 of the second digital data 20 can be retrieved directly using the linking codes 32 inserted into the first digital data 10. For example, in the case where the portion 11 having identification code 12 A1 is retrieved, the corresponding portion 21 can be retrieved simply using the linking code 32 xxx associated with it in the first digital data 10.

The management method also includes a step d) of memorisation in memory means of the first digital data 10 (optionally with the linking codes 32 which were associated with it in step c2)), of the second digital data 20 and third digital data 30.

Advantageously, the step d) is carried out through a predetermined classification of the first 10 and second 20 digital data according to preselected classification fields. This allows a successive "structured" search of such digital data (that is, through the fields which they were memorised with).

For example the classification fields used for memorising the first digital data 10 are the field of the general register number of the trial, of the judge, of the public prosecutor, of the accused and of the hearing number.

Moreover, in the case of the first digital data 10, the step d) is preferably also carried out through a predetermined indexation thereof (carried out with conventional techniques) according to preselected indices. This allows a successive "non-structured" search of the first digital data 10 (that is, through key words).

Typically, the management method also includes a step e) of providing fourth digital data 60 (figure 6) relative to trial exhibits. Such data are, for example, relative to the evidence or exhibits presented during each hearing of the trial by the experts, the public prosecutor or the barristers.

They are, for example, files in image format JPEG, GIF, BIT MAP, TIFF, in text format PDF, TXT, RTF, DOC or in audio, video and/or audio-video format such as MPEG, MJPEG, Real Network, Microsoft Media Player, Quick Time, MP3 (audio). Moreover, they are obtained through a conversion of the analogue-digital type of the exhibits. For example, in the case of data in text format and image format such conversion can be carried out through a conventional scanner and software programs associated with it.

When the management method includes also the step e), linking codes 62, which allow at least part of the predetermined portions 11 to be linked to corresponding portions 61 of the fourth digital data 60, are associated with the first digital data 10.

The association of such linking codes 62 with the first digital data 10 can, for example, be carried out by the operator who carries out the transcription of the first digital data 10.

The management method includes, moreover, a step f) of memorisation in a conventional memory means of the fourth digital data 60.

Advantageously, the step f) is carried out through a suitable classification, according to preselected fields (for example, hearing date, type of exhibit, etc.).

The management method also includes a step g) of retrieval of first digital data 10, second digital data 20 and fourth digital data 60.

Advantageously, such retrieval is carried out using the preselected fields of classification with which the data were memorised in step d).

Moreover, in the case of the first digital data 10, such retrieval can also be carried out using the preselected indices with which they were memorised in step d).

Advantageously, the retrieval step g) allows the retrieval of a predetermined portion of the first digital data 10 and the corresponding portion 21 of the second digital data 20 and/or one or more corresponding portions 61 of the fourth digital data 60, using the linking codes 32 and 62 respectively.

The data thus retrieved can then be output, according to a step h), through conventional output means suitable for the purpose.

The management method according to the invention can be carried out by an electronic apparatus (such as, for example, a conventional personal computer) or many electronic apparatuses linked up through, for example, a network of the conventional type.

In an embodiment of the invention, such apparatus 40 comprises a memory 41, a central processing unit (CPU) 42 and communication buses 45 between the memory 41 and the processing unit 42 (figure 4).

The memory 41 is suitable for memorising the first 10, the second 20, the third 30 and the fourth 60 digital data while the central processing unit 42 is suitable for carrying out the aforementioned steps a)-h) of the management method.

Typically, the apparatus 40 is linked to input means 43, output means 44 and 47 and, optionally, to a high-capacity external memorisation unit 46.

The input means 43 are typically made up of a keyboard, the output means 44 of a screen, the output means 47 of audio sound broadcast devices such as, for example, conventional loudspeakers and the external memorisation unit 46, of one or more magnetic disks and/or of one or more optionally automated optical files (Juke Box).

The input means 43 are, for example, used for the input of first 10, second 20 and fourth 60 digital data into the apparatus by an operator.

The output means 44 are, for example, used to visualise the portions of the first 10, second 20 and fourth 60 digital data which are retrieved in the step g) of the management method.

The output means 47 are, for example, used for the sound broadcast of the audio, when the second 20 and the fourth 60 digital data, retrieved in the step g) of the management method, are in audio and/or audio-video format.

The memory 41 of the apparatus 40 is also suitable for memorising a computer program, according to an aspect of the invention, including instructions suitable for carrying out the steps of the method according to the invention when the program is run on the apparatus 40.

According to an alternative, some steps of the management method, instead of being carried out automatically by the electronic apparatus 40, can also be carried out by an operator.

For example, the step c) of association with the first digital data 10 of linking codes 32, which allow the predetermined portions 11 of the first digital data 10 to be linked to corresponding portions 21 of the second digital data 20, can be carried out manually by an operator.

In this case, starting from the second digital data 20, the operator generates, during the transcription stage of the first digital data 10 in a digital file in text format, the linking codes 32 and associates them with the relative predetermined portions 11 of the first digital data 10.

Alternatively, the step c) can be carried out according to a semi-automatic procedure which provides, for example, the subdivision, by the electronic apparatus 40, of the second digital data 20 (in audio, video and/or audio-video format) into a succession of clips of predeterminable length (through a synchronisation step); the analysis of each clip by an operator; the search by the operator, on the first digital data 10 in text format, of the words corresponding to the beginning of each clip analysed and, finally, the generation by the operator of the linking code 32 which allow the beginning of the clip analysed to be linked to the corresponding predetermined portion 11 of the first digital data 10.

According to a further variant, the step c) can be carried out through a first automatic stage suitable for automatically creating the third digital data 30 of figure 3a during the acquisition of the second digital data 20 (as already described above) and a second manual or semi-automatic stage suitable for associating linking sub-codes 32', which allow sub-portions 11' of the portions 11 to be linked to corresponding sub-portions 21' of the portions 21 of the second digital data 20, with the first digital data 10.

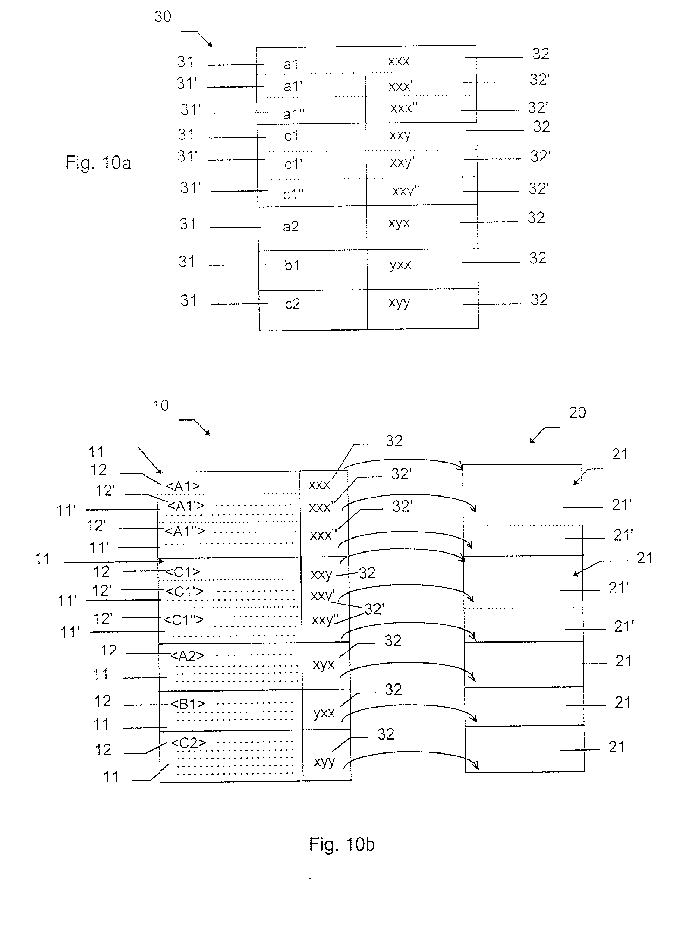

As shown in figure 10a, in this case the third digital data 30 comprise identification codes 31 and linking codes 32, generated automatically as described above, and identification sub-codes 31' and linking sub-codes 32' generated according to a manual or semi-automatic procedure of the type described previously.

Moreover, as shown in figure 10b, at least part of the portions 11 of the first digital data 10 are subdivided into sub-portions 11' with each of which an identification sub-index 12' and a linking sub-code 32' is associated.

The identification sub-codes 12' and 31' comprise information suitable for identifying the sub-portion 11' associated with them. For example, they contain information relative to the initial and final character of the text contained within the sub-portion 11' or to the initial character and length in characters of (or to the number of words contained in) the text contained inside the sub-portion 11'.

In turn, the linking sub--codes 32' can, in the same way as the linking codes 32, be time stamps containing information relative to the instants (hours, minutes, seconds) of the start of acquisition of the corresponding sub-portions 21' and to the time windows associated with each acquisition (for example, available in the form from <time> to <time> or in the form from <time> for <duration>.

With the subdivision of the portions 11 into sub-portions 11', linked through the linking sub-codes 32' to corresponding sub-portions 21' of the second digital data 20, the method according to the invention allows the retrieval not only of a whole statement made by a participant at a trial but also a part of it.

This can be advantageous when the statements made by the participants at a trial are long and a user is interested in retrieving only part of them.

Figure 5 shows an embodiment of a system 50, according to an aspect of the invention, for the acquisition of data relative to procedural statements made by participants at a trial.

Such system 50 comprises
- a plurality of recording means 55 each associated with a participant or type of participant suitable for recording, in at least one format selected from the group audio, video and audio-video the statements made by the participants; and
- a unit 58 for managing the acquisition of data relative to the procedural statements.

In turn, according to an embodiment of the invention, the unit 58 comprises
- first control means 51 which, following the start of a statement by a participant, are suitable for automatically activating the recording means 55 associated with that participant;
- second control means 52 which, following the start of a statement made by a participant, are suitable for generating the identification code 31 containing information relative to the participant associated with the recording means activated by the first control means 51 and to the number of times that that recording means has been activated;
- third control means 53 which, following the start of a statement made by a participant, are suitable for generating the linking code 32 containing information relative to the instant when the recording means 55 is activated by the first control means 51;
- fourth control means 54 which, following the start of a statement made by a participant, generate a correspondence between the identification code generated by the second control means 52 and the linking code generated by the third control means 53.

In a preferred embodiment, the recording means 55 comprise digital recording means which can be linked to an apparatus 40 according to the invention, of the type previously described with reference to figure 4.

In this case, the second digital data 20 in audio, video and/or audio-video format are supplied directly to the apparatus 40 from the digital recording data 55 through a suitable conventional connecting means.

The unit 58 also advantageously comprises a memory (not shown) suitable for memorising a computer program, according to an aspect of the invention, including instructions which, when carried out in a computer, constitute the control means 51-54.

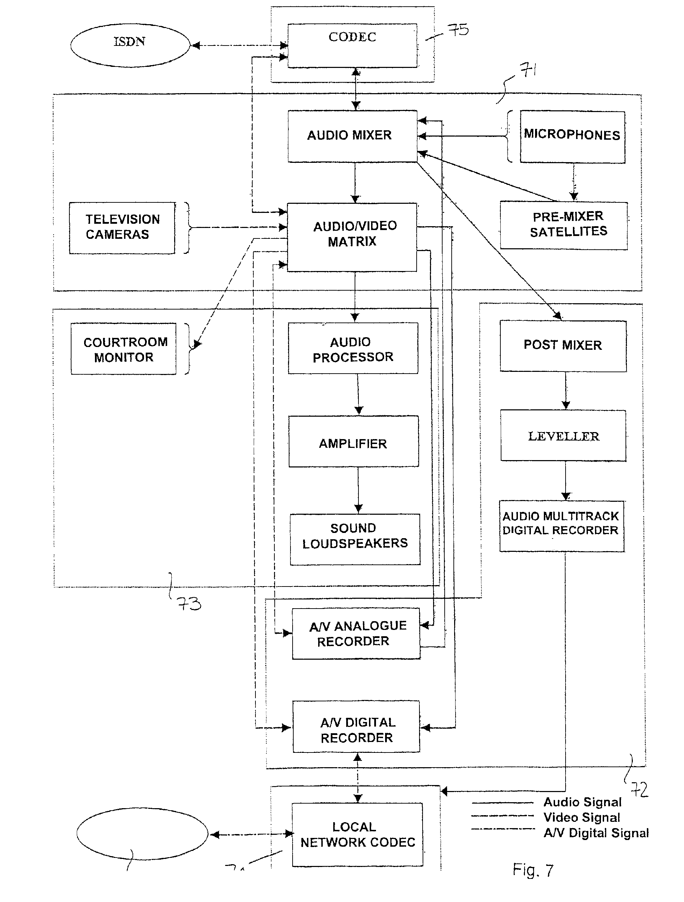

Figure 7 shows an example of the recording means 55 of the acquisition system 50.

In particular, in the example of figure 7, the recording means 55 comprise an audio video signal acquisition-management-distribution sub-system 71; a recording-reproducing sub-system 72; an audio-video broadcasting sub-system 73 and an interfacing sub-system 74, 75.

In the audio-video signal acquisition-management-distribution sub-system 71 all the audio sources are mixed and sent to an audio-video matrix while all the video sources are directly acquired by the matrix. A digital control system (housed both in an audio mixer and in the audio-video matrix) allows the audio signal to be associated with the corresponding video signal. The audio-video signals, mixed and coherently associated, are sent from the matrix to the other sub-systems.

The sub-system 71 comprises
- condenser type microphones which allow the amplification and the recording of the "spoken" in the courtroom. The number of microphones depends on the number of participants or types of participant at the trial;
- pre-mixers which gather many microphones on a single channel provided that they belong to the same type of participant (e.g. barristers, witnesses, representatives etc.). The presence and the amount of pre-mixers depends on the number of microphone positions;
- colour television cameras which provide for the shooting and recording of the images relative to the positions of the participants at the trial. The amount, type and optics depend upon the architecture of the courtroom.
- audio mixer which preamplifies, equalises and mixes the signals coming from the microphones, the pre-mixers, an ISDN codec (multivideoconference) and all other external source. The mixer generates control signals necessary to the audio-video matrix for the association of the corresponding audio-video signals;
- audio-video matrix which associates the audio-video signals and distributes them to the other sub-systems on the basis of the information received from the mixer. The number of inputs and outputs depends on the number of video sources.

The recording-reproduction sub-system 72, which is prearranged for the recording (analogue and digital) of the procedural statements and for the reproduction of audio-video contributions which may be asked for in a procedural sitting, comprises
- post-mixer which subdivides into groups all the audio contributions coming from the microphones and from the courtroom's audio sources. The number of groups is decided depending on the number of tracks available on the multitrack digital recorder;
- leveller which equalises the volume of the signals (or groups of signals) coming from the post-mixing process and directed to the multitrack digital recorder;
- multitrack digital recorder which allows the audio signals contained in the previously constituted groups to be recorded onto independent tracks. The recording, contained in a file, can be memorised on an optical support;
- audio-video analogue recorder (video-recorder) which records the statements of the trial on VHS video cassettes and reproduces audio-video contributions in VHS format;
- audio-video digital recorder which records the statements of the trial directly in digital format. The recording, contained in a file, can be memorised on an optical support.

The data thus recorded by the audio-video digital recorder, which are part of the second digital data 20, can be sent to the apparatus through the interfacing sub-system 74.

Moreover, also the digital audio signals coming from the multitrack digital recorder, which are part of the second digital data 20, can be sent to the apparatus 40 through the interfacing sub-system 74 provided that they are compatible with the successive data processing, for example MP3.

If the digital data coming from the audio-video digital recorder and/or the multitrack digital recorder are not already in one of the conventional formats used by the apparatus 40, they are first converted into one of such formats and then sent to the apparatus 40 through the interfacing sub-system 74.

The audio-video broadcasting sub-system 73 is suitable for processing the signal obtained from the mixing of all the audio contributors, to amplify and broadcast it in the courtroom and to visualise the images associated with the sound source in transmission on monitors stationed around the courtroom.

This comprises
- a digital audio computer which allows the sound broadcasting inside the courtroom to be optimised by intervening on parameters linked to the equalisation and the dynamics of the signal;
- an amplifier which amplifies the power of the previously mixed and elaborated audio signal. The dimensioning of the power depends on the architecture of the courtroom and the electrical and acoustic characteristics of the loudspeakers;
- loudspeakers which provide for broadcasting the audio signals in the courtroom. Technical characteristics such as the power, the maximum practicable acoustic pressure and the structure (sound track rather than projector) are strictly dependant on the acoustic characteristics of the courtroom and the positions available for the loudspeakers;
- colour monitors which visualise the images associated with the sound source in transmission (be it a microphone position, a reproduction device or the ISDN codec linked to a remote site). The amount and dimensions of the monitors depend upon the architectonic characteristics of the courtroom.

The interfacing sub-system is made up of two devices 74 and 75 independent from one another which are concerned with importing and exporting information regarding the trial from and to the external environment.

It comprises
- a geographic network codec 75 (for example in ISDN technology) for interfacing with the ISDN network which is provided by the ISDN network manager and manages the audio-video signal exchange necessary for the execution of a possible multivideoconference. As input it receives the audio-video signals directed to the broadcasting and recording sub-systems while as output it provides the audio-video signals sent to other remote trial locations. The signal received is acquired by the management sub-system and is then distributed to the various sub-systems 71-73.
- a local network codec 74 which sends the second digital data 20 containing the recordings made by the audio and/or audio-video digital recorder to the apparatus 40.

Once memorised in a memory means, the first, second and fourth digital data 10, 20 and 60 can be retrieved and output through suitable query masks provided in a method according to a further aspect of the invention.

In particular, such a retrieval method comprises a visualisation step A), for example on a screen of a Personal Computer, of a query mask comprising a plurality of predetermined fields for searching - according to preselected classification fields and/or indices with which the data were previously memorised - for predetermined information in the first digital data 10.

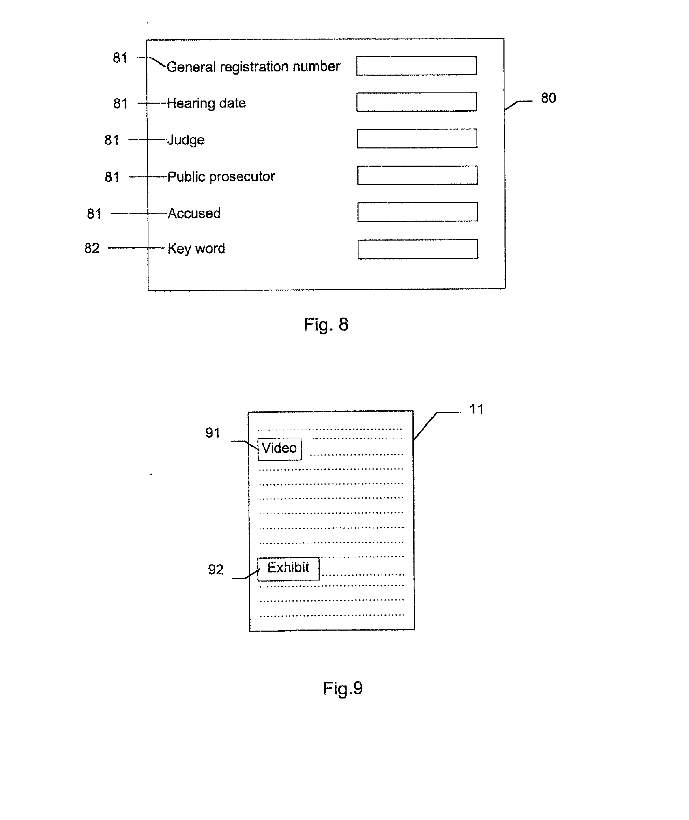

An example of a query mask 80 used to search in the first digital data 10 is shown in figure 8. Such a mask comprises five search fields 81 which allow information to be searched for, according to the general registration number of the trial, the hearing date, the name of the judge, of the public prosecutor and/or of the accused.

Moreover, the query mask 80 of figure 8 also comprises a field 82 for the non-structured (key words) search for information in the first digital data 10 according to predetermined indices with which the data were previously memorised.

The retrieval method comprises, moreover, the visualisation step B), following a search in a field of said query mask 80, of the predetermined portion 11 of the first digital data 10 containing the desired information.

Moreover, the aforementioned method also comprises the step C) of visualisation, together with the portion 11 of the first digital data 10 visualised in step B), of a linking element 91 which allows to output the portion 21 of the second digital data 20 corresponding to portion 11 and the step D) of visualisation of one or more linking elements 92 which allow to output one or more of the portions 61 of the fourth digital data 60 associated with portion 11.

Figure 9 shows an example of a portion 11 of the first digital data visualised following a search carried out through a query mask 80 and the elements 91 and 92 linking to a corresponding video portion 21 and a corresponding portion 61.

For example, clicking with the mouse of a computer on the linking elements 90 and 91 of a portion 11 visualised on the screen of a Personal Computer, the method according to the invention allows to output the corresponding portions 21 and 61 (for example, through visualisation on a computer screen and/or sound broadcasting with a loudspeaker).

The retrieval method of the invention can be carried out by an apparatus according to another aspect of the invention comprising means suitable for carrying out the steps A) -D).

Moreover, such a method can be carried out through a computer program comprising instructions suitable for carrying out the steps A) -D), when the program is carried out in a computer.

The retrieval method of the invention can, moreover, comprise further steps which allow predetermined information to be searched for directly in the second 20 and fourth 40 digital data. For example, this can be obtained through suitable conventional software such as, for example, Excalibur Screening Room from the manufacturing firm CONVERA CORPORATION, capable of carrying out the indexation and retrieval of images and video sequences.

## Claims

1. A method for the digital management of data originating from procedural statements made by participants at a trial comprising the steps of
a)providing first digital data (10) in text format relative to said procedural statements, said first digital data (10) being subdivided into a plurality of predetermined portions (11);
b)providing second digital data (20) relative to said procedural statements in at least one format selected from the group comprising video format, audio format and audio-video format;
**characterised in that** it also comprises the step of
c) associating linking codes (32), which allow said predeterminded portions (11) of said first digital data (10) to be linked to corresponding portions (21) of the second digital data (20), with said first digital data (10).

2. A method according to claim 1, wherein the step c) comprises the step of
c1) providing third digital data (30) containing first identification codes (31) of the predetermined portions (11) of said first digital data (10), said linking codes (32) which allow said predetermined portions (11) of said first digital data (10) to be linked to corresponding portions (21) of the second digital data (20) and a correspondence between said first identification codes (31) and said linking codes (32).

3. A method according to claim 2, wherein the first digital data (10) comprise second identification codes (12) each associated with a predetermined portion (11).

4. A method according to claim 3, wherein said identification codes (31) correspond with said second identification codes (12).

5. A method according to claim 3 or 4, wherein the step c) also comprises the step of
c2) inserting, in every portion (11) of said first digital data (10), the linking code (32) which allows such portion (11) to be linked to the corresponding portion (21) of said second digital data (20), using the second identification codes (12) contained within said first digital data (10) and the third digital data (30).

6. A method according to any of claims from 2 to 5, wherein the step c1) is carried out during a step of acquisition of the second digital data.

7. A method according to any of the previous claims from 1 to 6, wherein said predetermined portions (11) of said first data (10) correspond with statements made successively by participants at a trial.

8. A method according to claim 6 and according to claim 7, wherein, when the second digital data (20) are acquired through predetermined recording means (55), each associated with a participant or type of participant at the trial, the step c1) comprises the steps of
i. generating, in said third digital data (30), at each activation of a recording means (55) following the start of a participant's statement, the identification code (31) of the predetermined portion (11) of said first digital data (10) which corresponds with that statement made by that participant, said identification code (31) containing information relative to the participant associated with that recording means (55) and to the number of times that recording means (55) has been activated;
ii. generating, at each activation of a recording means (55), the linking code (32) which allows the predetermined portion (11) of said first digital data (10), corresponding to the statement made when the recording means(55) was activated, to be linked to the corresponding portion (21) of the second digital data (20); and
iii. generating, at each activation of a recording means (55), a correspondence between the identification code (31) and the linking code (32) generated in steps i. and ii..

9. A method according to any of the claims from 1 to 8, wherein the step b) comprises the step of acquiring the procedural statements through digital recording means (55).

10. A method according to any of the claims from 1 to 9, also comprising a step d) of memorisation in a memory means (41) of the first digital data (10) with the linking codes (32) associated with them in step c) and the second digital data (20).

11. A method according to any of the claims from 2 to 9, also comprising a step d) of memorisation in a memory means (41) of the third digital data (30)

12. A method according to claim 10, wherein the memorisation is carried out in step d) through a predetermined classification of the first digital data (10) according to preselected fields.

13. A method according to claim 10 or 12, wherein in step d) the memorisation is carried out through a predetermined classification of the second digital data (20) according to preselected fields..

14. A method according to claim 10, 12 or 13, wherein the memorisation is carried out in step d) through a predetermined indexation of the first digital data (10) according to preselected indices.

15. A method according to any of the claims from 1 to 14, also comprising a step e) of providing fourth digital data (60) relative to trial exhibits, said fourth digital data (60) being in at least one format selected from the group comprising text format, image format, video format, audio format and audio-video format.

16. A method according to claim 15, wherein, second linking codes (62) are also associated with said first digital data (10), said codes allowing at least part of said plurality of predetermined portions (11) to be linked to corresponding portions (61) of the fourth digital data (60).

17. A method according to claim 15 or 16, also comprising a step f) of memorisation in a memory means (41) of the fourth digital data (60).

18. A method according to claim 17 wherein the step f) is carried out through a predetermined classification, according to preselected fields, of the fourth digital data (60).

19. A method according to any of the claims from 10 to 18, also comprising a step g) of retrieval of memorised data (10, 20, 30, 40).

20. A method according to any of the claims 12, 13 or 18 and according to claim 19, wherein the step g) is carried out through the preselected classification fields.

21. A method according to claims 14 and 19, wherein the step g) of retrieval of the first digital data (10) is carried out through the preselected indexation indices.

22. A method according to claim 19, 20 or 21, wherein the step g) of retrieval comprises a step of retrieval of a predetermined portion (11) of the first digital data (10) and of the corresponding portion (21) of the second digital data (20), through the use of the linking codes (32) which allow said predetermined portions (11) of said first digital data (10) to be linked to corresponding portions (21) of the second digital data (20).

23. A method according to claim 19, 20 or 21 and according to claim 16, wherein the step g) of retrieval comprises a step of retrieval of a predetermined portion (11) of the first digital data (10) and of a least a corresponding portion (61) of the fourth digital data (60), through the use of the second linking codes (62) which allow at least part of said plurality of predetermined portions (11) to be linked to corresponding portions (61) of the fourth digital data (60).

24. A method according to any of the claims from 19 to 23, also comprising a step h) wherein the retrieved data are output through output means (44, 47).

25. An electronic apparatus (40) for the digital management of data originating from procedural statements made by participants at a trial comprising means suitable for carrying out the steps of the method according to any of the claims from 1 to 24.

26. A computer program comprising instructions suitable for carrying out the steps of the method according to any of the claims from 1 to 24 when the program is carried out on a computer.

27. A computer program according to claim 26, embodied on a computer readable medium.

28. A computer program according to claim 27, wherein the computer readable medium is selected from the group comprising a read-only memory or a magnetic recording means.

29. A computer program according to claim 26, carried on a carrier signal.

30. A computer program according to claim 29, wherein the signal is an electric carrier signal.

31. A computer program according to claim 29, wherein the signal is an optical carrier signal.

32. A unit (58) for managing the acquisition of data relative to procedural statements made by participants at a trial, said statements being recorded in at least one format selected from the group audio, video and audio-video through recording means (55) each associated with a participant or type of participant, said unit (58) comprising
- first control means (51) which, following the start of a statement by a participant, are suitable for automatically activating the recording means (55) associated with that participant;
- second control means (52) which, following the start of a statement by a participant, are suitable for generating an identification code (31) containing information relative to the participant associated with the recording means (55) activated by the first control means (51) and to the number of times that that recording means has been activated;
- third control means (53) which, following the start of a statement by a participant, are suitable for generating a linking code (32) containing information relative to the time at which the recording means (55) is activated by the first control means (51);
- fourth control means (54) which, following the start of a statement by a participant, generate a correspondence between the identification code (31) generated by the second control means (52) and the linking code (32) generated by the third control means (53).

33. A computer program comprising instructions which, when carried out on a computer, constitute the control means (51, 52, 53, 54) of the unit (58) of claim 32.

34. A computer program according to claim 33, embodied on a computer readable medium.

35. A computer program according to claim 33, carried on a carrier signal.

36. A system (50) for the acquisition of data relative to procedural statements made by participants at a trial comprising
- recording means (55) each associated with a participant or type of participant suitable for recording the statements made by the participants in at least one format selected from the group audio, video and audio-video;
- a management unit (58) according to claim 32.

37. A system (50) according to claim 36, wherein the recording means (55) comprise digital recording means which can be linked to an apparatus (40) according to claim 25.

38. A method for the digital retrieval of digital data originating from procedural statements made by participants at a trial comprising the steps of
A)displaying a query mask comprising a plurality of predetermined fields for searching for predetermined information in the first digital data (10) in text format;
B)displaying, following a search in at least one field of said query mask, a predetermined portion (11) of the first digital data (10) which contains the predetermined information searched for;
C)displaying, together with the portion (11) of the first digital data (10) displayed in step B), a linking element (91) which allows to output a portion (21) of second digital data (20) corresponding to the portion (11), said second digital data being in at least one format selected from the group comprising video format, audio format and audio-video format.

39. A method according to claim 38, also comprising the step D) of displaying, together with the portion (11) of the first digital data (10) displayed in step B), at least one linking element (92) which allows to output at least a portion (61) of the fourth digital data (60) corresponding to the portion (11), said fourth digital data (60) being in at least one format selected from the group comprising text format, image format, video format, audio format and audio-video format.

40. An apparatus for the digital retrieval of digital data originating from procedural statements made by participants at a trial comprising means suitable for carrying out the steps of the method according to claim 38 or 39.

41. A computer program for the digital retrieval of digital data originating from procedural statements made by participants at a trial comprising instructions suitable for carrying out the steps of the method according to claim 38 or 39 when the program is run on a computer.

42. A program according to claim 41, embodied on a computer readable medium.

43. A program according to claim 41, carried on a carrier signal.
